# EUROPÄISCHE PATENTSCHRIFT

(11) **EP 1 012 699 B1**
(45) Veröffentlichungstag und Bekanntmachung des Hinweises auf die Patenterteilung: **12.12.2001**
(21) Anmeldenummer: 98949937.1
(22) Anmeldetag: 24.08.1998
(51) Int. Cl.: G06F 3/14

(54) **VORRICHTUNG ZUM STEUERN MEHRERER ANZEIGEEINRICHTUNGEN, SYSTEM MIT DIESER VORRICHTUNG UND ZUGEHÖRIGES VERFAHREN**
DEVICE FOR CONTROLLING A PLURALITY OF DISPLAY UNITS, SYSTEM COMPRISING THIS DEVICE AND RELATED METHOD
DISPOSITIF POUR COMMANDER PLUSIEURS UNITES D'AFFICHAGE, SYSTEME COMPORTANT CE DISPOSITIF, ET PROCEDE CORRESPONDANT

(30) Priorität: 17.09.1997 DE 19740924
(43) Veröffentlichungstag der Anmeldung: 28.06.2000
(73) Patentinhaber: Wincor Nixdorf GmbH & Co KG, 33106 Paderborn (DE)
(72) Erfinder: BAITZ, Günter, D-13503 Berlin (DE); WIDMAIER, Dominik, D-12157 Berlin (DE)
(86) Internationale Anmeldenummer: DE9802485
(87) Internationale Veröffentlichungsnummer: WO9914658

(56) Entgegenhaltungen:
- EP-A- 0 579 402
- US-A- 5 488 385
- US-A- 5 500 654

## Beschreibung

Die Erfindung betrifft eine Vorrichtung, insbesondere einen VGA-Adapter, zum Ansteuern mehrerer Anzeigeeinrichtungen, ein System, in dem diese Vorrichtung verwendet werden kann, und ein Verfahren zur Ansteuerung mehrerer Anzeigeeinrichtungen.

Eine Anzeigeeinrichtung oder ein Monitor wird in Computersystemen allgemein an einer Monitor-Schnittstelle betrieben und von dieser gesteuert. Bei einem PC-Computersystem kann z.B. eine nach dem VGA-Standard arbeitende Monitorschnittstelle verwendet werden, die von einer speziellen Bildschirm-Steuereinheit, z.B. von einem VGA-Controller oder VGA-Adapter bereitgestellt wird. Das Betriebssystem des PCs enthält dann allgemein ein entsprechendes Treiberprogramm zur Steuerung des VGA-Adapters, auf das die Anwendungsprogramme, die auf dem jeweiligen PC installiert sind, bei Bedarf zur Anzeige von Graphik oder Text zugreifen, um das entsprechende Bild am Sichtgerät unter Ansteuerung des VGA-Adapters anzuzeigen.

Es gibt nun Anwendungen, die den Betrieb mehrerer Sichtgeräte oder Anzeigeeinrichtungen an einem Computer erfordern. Allgemein sind mehrere Anzeigeeinrichtungen dann erforderlich, wenn mehrere Personen Datenerfassungs- oder Bearbeitungsvorgänge beobachten oder wenn verschiedenen Personen nur jeweils ein Teil von gegebenen Gesamtinformationen eines Vollbilds angezeigt werden soll. Eine typische Anwendung mit mehreren Anzeigeeinrichtungen ist beispielsweise an Registrierkassen oder an Dienstleistungs- oder POS-Terminals gegeben, die zumindest mit einer Bediener- und einer Kundenanzeige ausgestattet sind. Dem Bediener wird auf einem ersten Monitor z.B. ein Vollbild dargeboten, während dem Kunden nur ein Teilbild bzw. ein Fensterausschnitt aus dem Vollbild auf einer dem Kunden zugewandten weiteren Anzeigeeinrichtung angezeigt wird. Zudem kann das Computersystem einen extra Animationsbildschirm für die Wiedergabe von Werbung oder allgemeiner Informationen oder auch eine Nummern-Anzeigeeinrichtung für die Anzeige der Reservierungsnummer eines nächsten Kunden haben, wobei diese Informationen wiederum ein Fenster aus dem Vollbild sein können, das dem Bediener gezeigt wird. Wird nun jedes Sichtgerät des Computersystems über eine eigene Schnittstelle, also z.B. einen eigenen VGA-Adapter, angesteuert, ist entsprechend der Anzahl der einzelnen Bildschirmsteuereinheiten ein relativ großer Platz für deren Unterbringung notwendig. Zudem bedeutet der Einsatz mehrerer Bildschirmsteuereinheiten einen entsprechend großen Kostenaufwand. Die Verwaltung bzw. die Steuerung mehrerer unabhängiger Bildschirmsteuereinheiten kann auch zu zeitkritischen Problemen oder zu einer unerwünscht hohen Auslastung des Prozessors führen. Außerdem lassen manche Betriebssysteme den Anschluß mehrerer VGA-Adapter nicht zu.

In der US 5 488 385 A ist bereits eine Anordnung mit einem speziellen VGA-Adapter zur gleichzeitigen Steuerung zweier Anzeigeeinrichtungen vorgeschlagen worden, auf denen ein jeweils von der anderen Anzeige unabhängiges Vollbild erzeugt werden kann. Die Anordnung umfaßt einen Videospeicher, der die Bilddaten beider Vollbilder wortweise verschachtelt speichert, und eine Wandlerschaltung, die mit dem Videospeicher verbunden ist und aus den aus dem Videospeicher sequentiell ausgelesenen Bilddaten die Anzeigeeinrichtungen ansteuernde Anzeigesignale erzeugt. Die Darstellung von Teilbildern ist nicht vorgesehen.

Aus der US 5 500 654 A ist eine VGA-Steuerung bekannt, mit der Videofenster von beispielsweise 640 x 480 Bildpunkten an einem beliebigen Ort auf dem Bildschirm eines einzigen Sichtgerätes mit einer größeren Darstellungsfläche, beispielsweise mit 1024 x 768 Bildpunkten, dargestellt werden können. Die Bilddaten der Videofenster sind in einem Videospeicher gespeichert. Den Videofenstern ist eine Startadresse für den ersten Bildpunkt und die Größe des Fensters zugeordnet.

Aufgabe der Erfindung ist es, eine Vorrichtung zur Steuerung mehrerer Anzeigeeinrichtungen bzw. ein System mit dieser Vorrichtung und ein zugehöriges Verfahren anzugeben, die den Betrieb mit Fensterfunktion mehrerer Anzeigeeinrichtungen ermöglichen.

Diese Aufgabe wird durch die Vorrichtung gemäß Anspruch 1, das System gemäß Anspruch 9 bzw. durch das Verfahren gemäß Anspruch 10 gelöst. Demnach umfaßt die erfindungsgemäße Vorrichtung, insbesondere der erfindungsgemäße VGA-Adapter, zur gleichzeitigen Steuerung mehrerer Anzeigeeinrichtungen, wobei die Vorrichtung Bilddaten in Anzeigesignale umsetzt und an die einzelnen Anzeigeeinrichtung ausgibt, um ein Vollbild oder ein Fenster aus dem Vollbild oder auch einem Teil einer insgesamt anzuzeigenden virtuellen Bildfläche auf den Anzeigeeinrichtungen zu erzeugen, einen Videospeicher, der Bilddaten eines Vollbildes speichert, eine Wandlerschaltung, die mit dem Videospeicher verbunden ist und aus den aus dem Videospeicher sequentiell ausgelesenen Bilddaten die Anzeigeeinrichtungen ansteuernde Anzeigesignale erzeugt, die einen Farbwert oder einen Standardwert haben, eine Registereinrichtung, die mit der Wandlerschaltung verbunden ist und Fensterdaten speichert, die jedes auf einer der Anzeigeeinrichtungen anzuzeigende Fenster aus dem Vollbild kennzeichnen, wobei die Wandlerschaltung Anzeigesignale mit Farbwert in Abhängigkeit von den Fensterdaten der Registereinrichtung für diejenigen Bilddaten erzeugt, die dem jeweils anzuzeigenden Fenster aus dem Vollbild zugeordnet sind, und wobei die Wandlerschaltung Anzeigesignale mit Standardwert für alle anderen Bilddaten erzeugt, die nicht dem jeweiligen anzuzeigenden Fenster aus dem Vollbild zugeordnet sind.

Die erfindungsgemäße Vorrichtung hat den entscheidenden Vorteil, daß durch die Verwendung der Registereinrichtung eine programmierbare Fensterfunktion für die Anzeige eines beliebigen Fensterausschnitts aus einem Vollbild, das im Videospeicher in der Form von digitalen Bilddaten mit Pixelzuordnung gespeichert ist, auf einer der Anzeigeeinrichtungen durch eine einfache Belegung oder Programmierung der Registereinrichtung mit Fensterdaten ermöglicht wird. Die übergeordnete Steuereinheit, z.B. die CPU eines PCs oder eine Prozessoreinrichtung, braucht nämlich nur die Registereinrichtung mit den dem Fenster zugeordneten Fensterdaten zu laden, um das Fenster aus dem Vollbild auf der entsprechenden Anzeigeeinrichtung anzuzeigen. Da das angezeigte Fenster aus dem Vollbild von den in der Registereinrichtung geladenen Fensterdaten abhängt, die das angezeigte Fenster kennzeichnen oder definieren, können je nach Anwendungsfall unterschiedliche Fenster auf den einzelnen Anzeigeeinrichtungen gleichzeitig angezeigt werden. Als Fenster ist dabei jeder Ausschnitt aus dem Vollbild zu verstehen, wobei das Fenster auch dem Vollbild entsprechen kann.

Diese programmierbare Fensterfunktion der erfindungsgemäßen Vorrichtung ermöglicht zudem eine hohe Flexibilität und einen breiten Einsatzbereich, da die einzelnen auf den verschiedenen Anzeigeeinrichtungen darzustellenden Fenster über das Laden von entsprechenden Fensterdaten in die Registereinrichtung von einem beliebigen Anwendungsprogramm aus definiert werden können.

Die erfindungsgemäße Vorrichtung kann zur Ansteuerung mehrerer n Anzeigeeinrichtungen des gleichen Typs oder unterschiedlichen Typs ausgelegt sein. Als Anzeigeeinrichtung kommen z.B. Monitore vom Kathodenstrahl-Röhrentyp (CRT-Displays), LCD-Anzeigen, ein Plasma-Display und ähnliche Displays in Frage.

Die Wandlerschaltung der erfindungsgemäßen Vorrichtung kann zur direkten Ansteuerung der n Anzeigeeinrichtungen n Anzeigesignal-Erzeugungseinrichtungen umfassen, die jeweils für den Typ von Anzeigeeinrichtung ausgelegt sind, den sie direkt ansteuern. Sollen z.B. drei CRT-Monitore angesteuert werden, umfaßt die Wandlerschaltung der erfindungsgemäßen Vorrichtung entsprechend drei RAMDACs als Anzeigesignal-Erzeugungseinrichtungen. Sollen dagegen z.B. ein CRT-Monitor und eine LCD-Anzeige angesteuert werden, umfaßt die Wandlerschaltung der erfindungsgemäßen Vorrichtung entsprechend einen RAMDAC zur Ansteuerung des CRT-Monitors und eine Schaltung zur Ansteuerung der LCD-Anzeige als Anzeigesignal-Erzeugungseinrichtungen. Verschiedene Wandlerschaltungen mit entsprechenden Anzeigesignal-Erzeugungseinrichtungen sind z.B. in dem US-Patent-Dokument Nr. 5,491,496 beschrieben.

Da zur gleichzeitigen Ansteuerung mehrerer Anzeigeeinrichtungen bei der vorliegenden Erfindung im wesentlichen nur eine zusätzliche Registereinrichtung und eine entsprechend der Anzahl und des Typs der anzusteuernden Anzeigeeinrichtungen ausgelegte Wandlerschaltung vorzusehen sind und diese Einrichtungen z.B. als integrierte Schaltung ausgelegt werden können, läßt sich die erfindungsgemäße Vorrichtung bzw. der erfindungsgemäße VGA-Adapter platzsparend auf einer Leiterplatte oder einem Controller-Board unterbringen.

Die Registereinrichtung hat vorzugsweise n Registerstellen, die wortweise oder stellenweise von z.B. einer übergeordneten Prozessoreinrichtung, einem Host oder einer CPU eines Personalcomputers, mit digitalen Fensterdaten beschrieben werden können, wodurch das Fenster mit einer geringen Anzahl von Programmschritten programmierbar ist.

Die erfindungsgemäße Vorrichtung bzw. der erfindungsgemäße VGA-Adapter wird in dem erfindungsgemäßen System verwendet, das mehrere Anzeigeeinrichtungen und eine Prozessoreinrichtung, z.B. einen Personalcomputer mit Bussystem, CPU, Massenspeicher, Arbeitsspeicher usw. umfaßt. Die Prozessoreinrichtung erzeugt die Bilddaten, die in dem Videospeicher der erfindungsgemäßen Vorrichtung gespeichert werden, und liest die Bilddaten aus dem Videospeicher sequentiell aus, um sie anzuzeigen. Die Prozessoreinrichtung des erfindungsgemäßen Systems hat weiterhin die Funktion, die Registereinrichtung der erfindungsgemäßen Vorrichtung mit den Fensterdaten zu laden, um ein vom Anwendungsprogramm vorgegebenes Fenster aus dem Vollbild auf einer der Anzeigeeinrichtungen des erfindungsgemäßen Systems darzustellen.

Das erfindungsgemäße Verfahren zum gleichzeitigen Anzeigen von Bilddaten auf mehreren Anzeigeeinrichtungen oder

Displays, das auf dem erfindungsgemäßen System implementiert ist, umfaßt die folgenden Schritte:
Die Bilddaten eines Vollbildes werden erzeugt und gespeichert,
Fensterdaten werden erzeugt und gespeichert, die jedes auf einer der Anzeigeeinrichtungen anzuzeigende Fenster aus dem Vollbild kennzeichnen,
anschließend werden die gespeicherten Bilddaten sequentiell gelesen und in Anzeigesignale umgesetzt, die jeweils einen Farbwert oder einen Standardwert haben, wobei Anzeigesignale mit Farbwert in Abhängigkeit von Fensterdaten für diejenigen Bilddaten erzeugt werden, die dem anzuzeigenden Fenster aus dem Vollbild zugeordnet sind, und wobei Anzeigesignale mit Standardwert für alle anderen Bilddaten erzeugt werden, die nicht dem anzuzeigenden Fenster aus dem Vollbild zugeordnet sind.

Vorteilhafte Weiterbildungen der Erfindung sind den Unteransprüchen 2 bis 7 zu entnehmen. Weitere Vorteile, vorteilhafte Weiterbildungen und Anwendungsmöglichkeiten der Erfindung sind aus der nachfolgenden Beschreibung einer Ausführungsform der Erfindung in Verbindung mit den Zeichnungen zu entnehmen. Es zeigen:
- Figur 1: ein schematisches Blockdiagramm einer Ausfühungsform des erfindungsgemäßen Systems; und
- Figur 2: ein Blockdiagramm einer Anzeigesignal-Erzeugungseinrichtung, die in der Ausführungsform der Figur 1 des erfindungsgemäßen Systems verwendet werden kann.

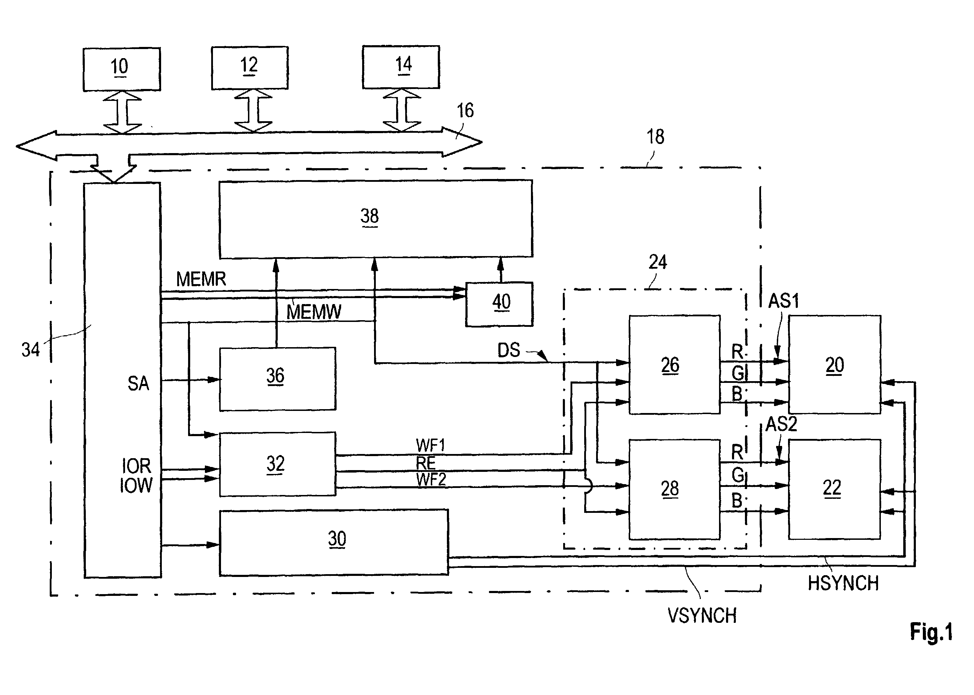

Die Figur 1 zeigt ein schematisches Blockdiagramm einer Ausführungsform des erfindungsgemäßen Systems, das auf der Basis eines Personalcomputers als Prozessoreinrichtung ausgelegt ist und im wesentlichen eine CPU 10 einen Arbeitsspeicher 12, der als RAM ausgelegt ist, einen Massenspeicher 14, z.B. eine Festplatte, einen VGA-Adapter 18 als erfindungsgemäße Vorrichtung und einen BUS 16 umfaßt, über den die Einrichtungen 10, 12, 14 und 18 miteinander kommunizieren können. Die CPU 10 umfaßt z.B. einen Mikroprozessor, der mit 100 MHz getaktet ist. Im Massenspeicher 14 sind das Betriebssystem, Treiberprogramme und Anwendungsprogramme gespeichert. Der BUS 16 umfaßt sämtliche Daten-, Adreß- und Steuerleitungen, wie sie bei Personalcomputern üblich sind. Der Personalcomputer umfaßt weiterhin z.B. ein BIOS, Ein-/Ausgabe-Schnittstellen und weitere Einheiten und hat sonst auch den üblichen Aufbau. Diese Einheiten sind allgemein bekannt und sind deshalb aus Vereinfachungsgründen nicht in der Figur 1 dargestellt.

Der VGA-Adapter 18 ist eingangsseitig mit dem BUS 16 verbunden und ausgangsseitig mit einer ersten Anzeigeeinrichtung 20 und einer zweiten Anzeigeeinrichtung 22 verbunden, die als CRT-Monitore mit identischem Aufbau ausgelegt sind. Der VGA-Adapter erzeugt ein erstes Anzeigesignal AS1 zur Ansteuerung der ersten Anzeigeeinrichtung 20 und ein zweites Anzeigesignal AS2 zur Ansteuerung der zweiten Anzeigeeinrichtung 22. Die Anzeigesignale AS1 und AS2 sind jeweils RGB-Signale mit der für die Ansteuerung von CRT-Monitoren üblichen Spezifikation. Der VGA-Adapter 18 erzeugt weiterhin ein Vertikal-Synchronsignal VSYNCH und ein Horizontal-Synchronsignal HSYNCH, die die herkömmliche Vertikalablenkung bzw. Horizontalablenkung der CRT-Monitore steuern.

Auf dem Bildschirm der Anzeigeeinrichtungen 20 und 22 sind jeweils z.B. 640 x 640 Bildpunkte oder Bildelemente bzw. Pixel, die 640 Zeilen x 640 Spalten entsprechen, mit jeweils einer aus 256 Farben darstellbar.

Der VGA-Adapter 18 umfaßt im wesentlichen einen Videospeicher 38, der als RAM ausgelegt ist, eine Videospeicher-Steuereinheit 40, die die Lese- und Schreibvorgänge des Videospeichers 38 direkt steuert, eine Adreßsteuereinheit 36 für den Videospeicher 38, eine Registereinrichtung 32, eine Wandlerschaltung 24, die von der Registereinrichtung 32 gesteuert wird, eine Timingschaltung 30, die das Vertikal-Synchronsignal VSYNCH und das Horizontal-Synchronsignal HSYNCH erzeugt, und eine BUS-Schnittstelle 34, über die der VGA-Adapter 18 mit dem BUS 16 des Personalcomputers verbunden ist. Der genaue Aufbau eines herkömmlichen VGA-Adapters ist z.B. in der US 5,491,496 erläutert, auf die diesbezüglich Bezug genommen wird.

Der Videospeicher 38 ist mit der Videospeicher-Steuereinheit 40, mit der Wandlerschaltung 24 und mit der Adreßsteuereinheit 36 verbunden. Will die CPU 10 über die BUS-Schnittstelle 34 den Videospeicher 38 beschreiben, also Bilddaten in dem Videospeicher 38 speichern, gibt die BUS-Schnittstelle 34 an die Videospeicher-Steuereinheit 40 ein Speicherschreibsignal MEMW aus und auch ein Adreßsignal SA an die Adreßsteuerung 36 aus, die dieses Adreßsignal SA in eine Adresse für den Videospeicher 38 umsetzt. Liegt das Speicherschreibsignal MEMW an der Videospeicher-Steuereinheit 40 an, gibt diese den Videospeicher 38 zum Einschreiben von Bilddaten des Datensignals DS unter der zugeführten Adresse frei. Sollen Bilddaten aus dem Videospeicher 38 ausgelesen werden, gibt die BUS-Schnittstelle 34 unter der Steuerung der CPU 10 ein Speicherlesesignal MEMR an die Videospeicher-Steuereinheit 40 aus, die daraufhin den Videospeicher 38 freigibt, Bilddaten unter der angelegten Adresse an die Wandlerschaltung 24 auszulesen. Der Videospeicher 38 ist dafür ausgelegt, Bilddaten für 640 x 640 Bildpunkte bzw. Bildelemente, also für ein Vollbild, das auf dem Bildschirm der ersten Anzeigeeinrichtung 20 und der zweiten Anzeigeeinrichtung 22 dargestellt werden kann, zu speichern.

In dem vorliegenden Ausführungsbeispiel gemäß Figur 1 wird davon ausgegangen, daß die im Videospeicher 38 abgespeicherten Bilddaten für das jeweils zugeordnete Bildelemente aus den 640 x 640 Bildpunkten oder Bildelementen auch jeweils einer Farbe aus den 256 möglichen Farben entspricht, die auf den Anzeigeeinrichtungen 20 bzw. 22 darstellbar sind. Die Bilddaten der 640 x 640 Bildpunkte werden von der CPU durch entsprechend viele Schreibzyklen unter zeilen- und spaltenweisem Hochzählen der Adresse in den Videospeicher 38 eingelesen. Beim Auslesen des Vollbilds aus dem Videospeicher 38 werden die Bilddaten des Vollbilds dann ebenso in zeilen- und spaltenweiser Rasterung unter entsprechender Hochzählung der Adresse mit entsprechend 640 x 640 Lesezyklen aus dem Videospeicher 38 sequentiell ausgelesen. Die ausgelesenen Bilddaten werden dann von der Wandlerschaltung 24 in die Anzeigesignale AS1 und AS2 umgesetzt und von den Anzeigeeinrichtungen 20, 22 wiederum in der entsprechenden Zeilen- und Spaltenrasterung in Synchronisation mit dem Vertikal-Synchronsignal VSYNCH und dem Horizontal-Synchronsignal HSYNCH der Timingschaltung 30 dargestellt.

Die Registereinrichtung 32 umfaßt ein nicht gezeigtes Register mit 16 Stellen, in das die CPU spezielle Daten, die als Fensterdaten bezeichnet werden, einschreiben kann, wenn das Registerschreibsignal IOW an der Registereinrichtung 32 anliegt. Der Inhalt der Registereinrichtung 32, also des 16-stelligen Registers, steht am Ausgang der Registereinrichtung 32 zur Verfügung, wenn an der Registereinrichtung 32 eingangsseitig ein Registerlesesignal IOR anliegt. Wie in der Figur 1 gezeigt ist, gibt die Registereinrichtung 32 drei Signale aus, nämlich das Fensterignal WF1, das Freigabesignal RE und das Fenstersignal WF2.

Die Wandlerschaltung 24 umfaßt einen ersten RAMDAC 26 und einen zweiten RAMDAC 28 als Anzeigesignal-Erzeugungsschaltungen, die identisch aufgebaut sind. Der genaue Aufbau eines herkömmlichen RAMDACs ist in der US 5,574,478 beschrieben, auf die Bezug genommen wird. Der erste RAMDAC 26 ist mit dem Videospeicher 38 und der Registereinrichtung 32 eingangsseitig verbunden, um die sequentiell ausgelesenen Bilddaten im Datensignal DS vom Videospeicher 38 bzw. das Fenstersignal WF1 und das Freigabesignal RE von der Registereinrichtung 32 zu erhalten.

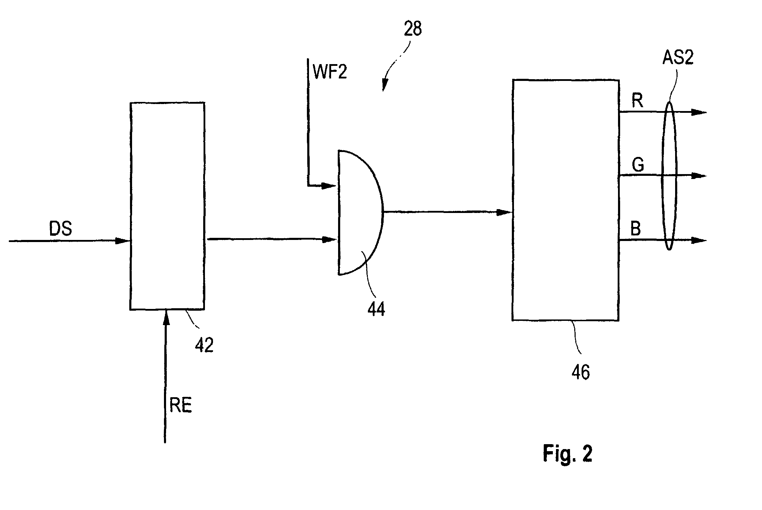

In der Figur 2 ist der Aufbau des RAMDACs 28 der Figur 1 gezeigt. Der RAMDAC 28 umfaßt einen Speicher 42, der als RAM ausgelegt ist, ein UND-Gatter 44 als Verknüpfungseinrichtung, das eingangsseitig mit dem Ausgang des Speichers 42 verbunden ist und dem das Fenstersignal WF2 zugeführt ist, und einen dreifachen DAC 46, der eingangsseitig mit dem Ausgang des UND-Gatters 44 verbunden ist und ausgangsseitig das Anzeigesignal AS2 als RGB-Signal erzeugt. Das an dem Speicher 42 eingangsseitig zugeführte Datensignal DS mit Bilddaten ist z.B. acht Bit breit und entspricht jeweils einem Farbwert aus 256 möglichen Farbwerten, die den einzelnen Bilddaten im Videospeicher 38 zugeordnet sind. Liegt am Speicher 42 das Freigabesignal RE (read enable) an, liest der Speicher 42 gemäß dem anliegenden Datensignal DS ein achtzehn Bit breites Farbwertsignal aus, das über das UND-Gatter 44 zum Eingang des DAC 46 gelangt, wenn gleichzeitig das Fenstersignal WF2 von der Registereinrichtung 32 am UND-Gatter 44 aktiv high anliegt. Der DAC 46 erzeugt dann aus dem achtzehn Bit breiten Farbwertsignal die RGB-Signale als Anzeigesignal AS2 über eine entsprechende Digital/Analog-Wandlung. Liegt dagegen am Eingang des UND-Gatters 44 des RAMDACs 28 ein Fenstersignal WF2 nicht vor, d.h., daß eine "0" anliegt, wird das Farbwertsignal vom Speicher 42 nicht zum DAC 46 durchgeschaltet, sondern am Ausgang des UND-Gatters 44 wird ein Null-Wert-Datensignal ausgegeben, das einem Standardwert, z.B. der Farbe Schwarz, einem Dunkeltastwert oder einem Border-Signal entspricht und vom DAC 46 in ein entsprechendes analoges Anzeigesignal AS2 mit Standardwert umgewandelt wird.

Nachfolgend wird die Funktionsweise der Ausführungsform der vorliegenden Erfindung gemäß den Figuren 1 und 2 zur Erläuterung auch des erfindungsgemäßen Verfahrens beispielhaft erläutert.

Es wird davon ausgegangen, daß das erfindungsgemäße System gemäß Figur 1 bereits im initialisierten und hochgefahrenen Zustand vorliegt und daß das Betriebssystem des Personalcomputers mit Treiber und auch ein Anwendungsprogramm, das im Massenspeicher 14 gespeichert ist, in den Arbeitsspeicher 12 über den BUS 16 unter der Steuerung der CPU 10 zur Ausführung abgespeichert wurden. Außerdem hat die CPU 10 bei der Ausführung des im Arbeitsspeicher 12 abgespeicherten Anwendungsprogramms bereits ein Vollbild im Videospeicher 38 mit 640 x 640 Bilddaten, also ein Vollbild, eingeschrieben. Auf der Anzeigeeinrichtung 20 soll gemäß dem Anwendungsprogramm nunmehr das Vollbild angezeigt werden. Auf der Anzeigeeinrichtung 22 soll auch gemäß Anwendungsprogramm nunmehr ein Fenster bzw. ein Ausschnitt oder Teilbild aus dem Vollbild angezeigt werden. Das anzuzeigende Fenster soll gemäß Anwendungsprogramm nur die Bildpunkte oder Bildelemente zwischen den Zeilen 100 bis 300 und zwischen den Spalten 200 bis 400 aus dem 640 Zeilen mal 640 Spalten großen Vollbild anzeigen. Die im Videospeicher 38 gespeicherten Bilddaten werden allgemein unter Steuerung der CPU 10 pixelweise mit der ersten Zeile beginnend zeilenweise sequentiell ausgelesen.

Die CPU 10 überprüft zuerst, ob auf der Anzeigeeinrichtung 20 das Vollbild oder ein Fenster aus dem Vollbild gemäß Anwendungsprogramm angezeigt werden soll. Da auf der ersten Anzeigeeinrichtung 20 das Vollbild angezeigt werden soll, setzt die CPU in der Registereinrichtung 32 ein der Anzeigeeinrichtung 20 zugeordnetes Fensterflag als Fensterdaten auf "1". Das Fenstersignal WF1 geht dann auf aktiv high, also auf "1". Da auf der ersten Anzeigeeinrichtung 20 das Vollbild angezeigt werden soll, bleibt das Fensterflag für das gesamte Auslesen des Vollbilds in der Registereinrichtung 32 auf "1" gesetzt.

Die CPU 10 überprüft dann, ob auch auf der zweiten Anzeigeeinrichtung 22 das Vollbild dargestellt werden soll. Da gemäß Anwendungsprogramm nur das Fenster zwischen den Zeilen 100 und 200 und den Spalten 200 und 400 aus dem Vollbild angezeigt werden soll, setzt die CPU 10 über die BUS-Schnittstelle 34 das der zweiten Anzeigeeinrichtung 22 zugeordnete Fensterflag als Fensterdaten auf "0" in der Registereinrichtung 32, wodurch das Fenstersignal WF2 ebenfalls auf "0" geht. Schließlich setzt die CPU 10 über die Registereinrichtung 32 das Freigabesignal RE, wodurch die Funktion der RAMDACs 26 und 28 gleichzeitig freigegeben wird.

Unter Steuerung der CPU 10 werden dann die Bilddaten der Zeilen 1 bis 99 aus dem Videospeicher 38 zyklisch und sequentiell ausgelesen und gleichzeitig den RAMDACs 26 und 28 der Wandlerschaltung 24 zugeführt. Da das Fenstersignal WF1 auf "1" gesetzt ist, erzeugt der RAMDAC 26 das Anzeigesignal AS1 mit den entsprechenden Farbwerten und die Zeilen 1 bis 99 des Vollbilds werden auf der Anzeigeeinrichtung 20 angezeigt. Da an dem RAMDAC 28 das Fenstersignal WF2 mit "0" anliegt, erzeugt der RAMDAC 28 für die Zeilen 1 bis 99 des Vollbilds ein Anzeigesignal AS2 mit Standardwert, also dem Schwarzwert bzw. einem Austast- oder Blankwert, mit der Folge, daß die Zeilen 1 bis 99 nicht auf der Anzeigeeinrichtung 22 angezeigt werden. Die Informationen der Zeilen 1 bis 99 des Vollbildes liegen damit z.B. einem Kunden, der die Anzeigeeinrichtung 22 betrachtet, nicht vor.

Nach komplettem Auslesen der Zeile 99 überprüft die CPU 10 zunächst, wann das Fenster in der Zeile 100 beginnt. Da das Fenster erst bei der Spalte 200 beginnt, läßt die CPU 10 die Registereinrichtung 32 unverändert und liest die Bilddaten der Zeile 100 bis zur Spalte 199 aus. Auf der Anzeigeeinrichtung 20 wird dann das Anzeigesignal mit Farbwert bis zur Spalte 199 angezeigt, während auf der zweiten Anzeigeeinrichtung 22 das Anzeigesignal AS2 mit Standardwert bis zur Spalte 199 ausgegeben wird.

Anschließend stoppt die CPU 10 das Auslesen von Bilddaten aus dem Videospeicher 38 und setzt nun auch das Fensterflag für die Anzeigeeinrichtung 22 in der Registereinrichtung 32 auf "1". Dies hat wiederum zur Folge, daß das Fenstersignal WF2 auf "1" geht. Die CPU 10 liest anschließend die Bilddaten der Zeile 100 von der Spalte 200 bis zur Spalte 400 an die RAMDACs 26 und 28 gleichzeitig aus. Da das Fenstersignal WF2 nun auf "1" ist, erzeugt der RAMDAC 28 das Anzeigesignal AS2 mit Farbwert.

Nach dem Auslesen und Anzeigen der Bildelements der Zeile 100 zwischen den Spalten 200 bis 400 stoppt die CPU 10 über die Zurücknahme des Speicherlesesignals MEMR das Auslesen der Bilddaten aus dem Videospeicher und setzt das Fensterflag für die zweite Anzeigeeinrichtung 22 in der Registereinrichtung 32 wieder zurück auf "0", wodurch das Fenstersignal WF2 ebenfalls auf "0" zurückgenommen wird, da die Bildelemente von der Zeile 100 und von der Spalte 401 bis 640 nicht mehr innerhalb dem vom Anwendungsprogramm vorgegebenen Fenster liegen. Anschließend setzt die CPU 10 das Auslesen von Bilddaten in der Zeile 100 fort, bis diese Zeile komplett ausgelesen ist. Der RAMDAC 28 erzeugt nun wieder ein Anzeigesignal AS2 mit Standardwert, da das Fenstersignal WF2 auf "0" gesetzt ist.

Für die Zeilen 101 bis einschließlich 200 führt die CPU 10 anschließend in analoger Weise die Ausleseschritte für das Auslesen der Bilddaten aus dem Videospeicher 38 und die Setz- und Rücksetzschritte des Fensterflags für die zweite Anzeigeeinrichtung 22 in der Registereinrichtung 32 wie bei der Zeile 100 fort, bis auch die Zeilen 101 bis 200 aus dem Videospeicher 38 ausgelesen sind.

Die CPU 10 gelangt nun zur Zeile 201, die komplett außerhalb dem vom Anwendungsprogramm vorgegebenen Fenster liegt, also auf der Anzeigeeinrichtung 22 nicht angezeigt werden soll. Da das Fensterflag für die Anzeigeeinrichtung 22 in der Registereinrichtung 32 bereits auf "0" gesetzt ist und damit das Fenstersignal WF2 ebenfalls auf "0" ist, verändert die CPU 10 die Fensterdaten, d.h. die Fensterflags in der Registereinrichtung 32 nicht und liest die Bilddaten der Zeilen 201 bis 640 sequentiell komplett aus. Da das Fenstersignal WF2 auf "0" ist, erzeugt der RAMDAC 28 wiederum Anzeigesignale AS2 mit Standardwert, mit der Folge, daß die Bildinformationen der Zeilen 201 bis 640 des Vollbildes auf der Anzeigeeinrichtung 22 nicht dargestellt werden.

Gemäß dem soeben erläuterten Beispiel wurde gemäß dem Anwendungsprogramm von dem erfindungsgemäßen System auf der Anzeigeeinrichtung 20 das Vollbild angezeigt, während auf der Anzeigeeinrichtung 22 nur das vom Anwendungsprogramm definierte Fenster zwischen den Zeilen 100 und 200 und den Spalten 200 und 400 angezeigt wurde. Damit sind dem Bediener, der die erste Anzeigeeinrichtung 20 betrachtet, die Informationen des Vollbildes zugänglich, während z.B. einem Kunden nur die Informationen des Fensters auf der Anzeigeeinrichtung 22 zugänglich sind.

Bei einem zweiten Beispiel verlangt das Ausführungsprogramm, daß auch auf der ersten Anzeigeeinrichtung 20 nur ein Fenster zwischen den Zeilen 1 und 50 und den Spalten 100 und 300 angezeigt wird, während auf der zweiten Anzeigeeinrichtung 22 ein Fenster aus dem Vollbild zwischen den Zeilen 100 und 200 und zwischen den Spalten 1 bis 640 angezeigt werden soll. Die CPU 10 führt dann ähnliche Ausleseschritte für die Bilddaten aus dem Videospeicher 38 und ähnliche Setz- und Rücksetzschritte der Fensterflags in der Registereinrichtung 32 durch, um die entsprechenden Fenster auf den Anzeigeeinrichtungen 20 und 22 anzuzeigen. Insbesondere muß die CPU das Fensterflag für die erste Anzeigeeinrichtung 20 für alle Bildelemente, die innerhalb des Fensters für die erste Anzeigeeinrichtung 20, also im Feld zwischen den Zeilen 1 bis 50 und den Spalten 100 bis 300, auf "1" setzen und das Fensterflag für alle anderen Bilddaten bzw. Bildelemente des Vollbildes auf "0" setzen, damit wirklich nur das vom Anwendungsprogramm definierte Fenster auf der Anzeigeeinrichtung 20 angezeigt wird. Ebenso muß die CPU 10 für die Anzeige des Fensters auf der zweiten Anzeigeeinrichtung 22, das zugehörige Fensterflag in der Registereinrichtung 32 innerhalb des Feldes zwischen den Zeilen 100 bis 200 und den Spalten 1 bis 640 auf "1" setzen, während für die Bildelemente der kompletten Zeilen 1 bis 99 und der Zeilen 201 bis 640 das zugehörige Fensterflag auf "0" in der Registereinrichtung 32 zu setzen ist, um nur das definierte Fenster auf der zweiten Anzeigeeinrichtung 22 darzustellen.

Die vorstehenden Beispiele haben aufgezeigt, daß das erfindungsgemäße System in der Lage ist, mehrere Anzeigeeinrichtungen gleichzeitig anzusteuern und auf den einzelnen Anzeigeeinrichtungen in Abhängigkeit von dem jeweiligen Anwendungsprogramm beliebig definierte Fenster aus einem Vollbild darzustellen, wodurch eine programmierbare Fensterfunktion realisiert wird.

### Bezugszeichenliste

- 10: CPU
- 12: Arbeitsspeicher
- 14: Massenspeicher
- 16: BUS
- 18: VGA-Adapter
- 20,22: Anzeigeinrichtung
- 24: Wandlerschaltung
- 26,28: RAMDACs
- 30: Timingschaltung
- 32: Registereinrichtung
- 34: BUS-Schnittstelle
- 36: Adreßsteuereinheit
- 38: Videospeicher
- 40: Videospeicher-Steuereinheit
- 42: Speicher
- 44: UND-Gatter
- 46: DAC
- DS: Datensignal
- MEMW: Speicherschreibsignal
- MEMR: Speicherlesesignal
- SA: Adreßsignal
- IOR: Registerlesesignal
- IOW: Registerschreibsignal
- VSYNCH: Vertikal-Synchronsignal
- HSYNCH: Horizontal-Synchronsignal
- AS1,AS2: Anzeigesignale
- RE: Freigabesignal
- WF1, WF2: Fenstersignale

## Patentansprüche

1. Vorrichtung, insbesondere VGA-Adapter (18), zur gleichzeitigen Steuerung mehrerer Anzeigeeinrichtungen (20,22), wobei die Vorrichtung Bilddaten in Anzeigesignale (AS1,AS2) umsetzt und an die Anzeigeeinrichtungen (20,22) ausgibt, um ein Vollbild auf den Anzeigeeinrichtungen zu (20,22) erzeugen, und wobei die Vorrichtung umfaßt: einen Videospeicher (38), der Bilddaten eines Vollbildes speichert, und eine Wandlerschaltung (24), die mit dem Videospeicher (38) verbunden ist und aus den aus dem Videospeicher (38) sequentiell ausgelesenen Bilddaten die Anzeigeeinrichtungen (20,22) ansteuernde Anzeigesignale (AS1, AS2) erzeugt,
**dadurch gekennzeichnet,**
**daß** auch ein Fenster aus dem Vollbild oder einem Teil einer insgesamt anzuzeigenden virtuellen Bildfläche auf den Anzeigeeinrichtungen (20,22) erzeugbar ist
und **daß** eine Registereinrichtung (32) mit der Wandlerschaltung (24) verbunden ist, in der Fensterdaten gespeichert werden, die jedes auf einer der Anzeigeeinrichtungen (20,22) anzuzeigende Fenster aus dem Vollbild kennzeichnen,
wobei die Wandlerschaltung (24) Anzeigesignale (AS1, AS2) mit Farbwert in Abhängigkeit von den Fensterdaten der Registereinrichtung (32) für diejenigen Bilddaten erzeugt, die dem jeweils anzuzeigenden Fenster aus dem Vollbild zugeordnet sind,
und wobei die Wandlerschaltung (24) Anzeigesignale (AS1, AS2) mit Standardwert für alle anderen Bilddaten erzeugt, die nicht dem anzuzeigenden Fenster aus dem Vollbild zugeordnet sind.

2. Vorrichtung nach Anspruch 1, **dadurch gekennzeichnet, daß** die Anzeigesignale RGB-Signale sind.

3. Vorrichtung nach Anspruch 1 oder Anspruch 2, **dadurch gekennzeichnet, daß** die Registereinrichtung (32) ein Register mit mehreren Registersätzen hat, die jeweils einer der n Anzeigeeinrichtungen (20,22) zugeordnet sind.

4. Vorrichtung nach einem der Ansprüche 1 bis 3, **dadurch gekennzeichnet, daß** die Wandlerschaltung (24) n Anzeigesignal-Erzeugungseinrichtungen hat, die jeweils die Anzeigesignale (AS1,AS2) für eine der n Anzeigeeinrichtungen (20,22) erzeugen.

5. Vorrichtung nach Anspruch 4, **dadurch gekennzeichnet, daß** die Wandlerschaltung (24) mehrere RAMDACs (26,28) hat, die jeweils einer Anzeigesignal-Erzeugungseinrichtung entsprechen, die ausgangsseitig jeweils mit einer der Anzeigeeinrichtungen (20,22) verbunden sind und die jeweils die Anzeigesignale (AS1,AS2) für die verbundene Anzeigeeinrichtung (20,22) erzeugen.

6. Vorrichtung nach einem der Ansprüche 1 bis 5, **dadurch gekennzeichnet, daß** die Registereinrichtung (32) ein Register mit n Registerstellen hat, von denen jede mit einer der Anzeigesignal-Erzeugungseinrichtungen ausgangsseitig verbunden ist.

7. Vorrichtung nach einem der Ansprüche 1 bis 6, **dadurch gekennzeichnet, daß** an der Wandlerschaltung (24) nach dem gleichen oder unterschiedlichen Anzeigeprinzip (CRT, LDC, Plasma) arbeitende Anzeigeeinrichtungen betreibbar sind, wozu der einer Anzeigeeinrichtung zugeordnete RAMDAC dessen Anzeigeprinzip entsprechend aufgebaut ist.

8. Vorrichtung nach einem der Ansprüche 1 bis 7, **dadurch gekennzeichnet, daß** die Vorrichtung auf einer gedruckten Leiterplatte untergebracht ist.

9. System mit programmierbarer Fensterfunktion, das umfaßt:
- mehrere Anzeigeeinrichtungen (20,22),
- eine Prozessoreinrichtung (10,12,14,16), die Bilddaten zur Anzeige auf den Anzeigeeinrichtungen (20,22) erzeugt und eine Vorrichtung, insbesondere einen VGA-Adapter (18), gemäß einem der Ansprüche 1 bis 8, wobei die Prozessoreinrichtung das Auslesen der Bilddaten aus dem Videospeicher (38) und das Setzen der Registereinrichtung (32) steuert.

10. Verfahren zum gleichzeitigen Anzeigen von Bilddaten auf mehreren Anzeigeeinrichtungen (20,22), bei dem Bilddaten eines Vollbildes erzeugt und gespeichert werden,
**gekennzeichnet durch** die folgenden Schritte:
- Fensterdaten werden erzeugt und gespeichert, die jedes auf einer der Anzeigeeinrichtungen (20,22) anzuzeigende Fenster aus dem Vollbild kennzeichnen,
- anschließend werden die gespeicherten Bilddaten sequentiell gelesen und in Anzeigesignale (AS1,AS2) umgesetzt, die jeweils einen Farbwert oder einen Standardwert haben,
* wobei Anzeigesignale (AS1,AS2) mit Farbwert in Abhängigkeit von den Fensterdaten für diejenigen Bilddaten erzeugt werden, die dem anzuzeigenden Fenster aus dem Vollbild zugeordnet sind, und
* wobei Anzeigesignale (AS1,AS2) mit Standardwert für alle anderen Bilddaten erzeugt werden, die nicht dem anzuzeigenden Fenster aus dem Vollbild zugeordnet sind.

## Claims

1. Apparatus, in particular VGA adapter (18), for simultaneously controlling a plurality of display devices (20, 22), wherein the apparatus converts picture data into display signals (AS1, AS2) and outputs them to the display devices (20, 22) in order to generate a whole picture on the display devices (20, 22), and wherein the apparatus comprises: a video memory (38), which stores picture data of a whole picture, and a converter circuit (24), which is connected to the video memory (38) and generates display signals (AS1, AS2) from the picture data which are read out sequentially from the video memory (38), which display signals drive the display devices (20, 22),
**characterized in that** a window from the whole picture or from a portion of a virtual picture area, to be displayed altogether, can also be generated on the display devices (20, 22), and **in that** a register device (32) is connected to the converter circuit (24), which stores window data which identify each window, from the whole picture, that is to be displayed on one of the display devices (20, 22),
wherein the converter circuit (24) generates display signals (AS1, AS2) with a colour value in dependence on the window data of the register device (32) for those picture data which are assigned to the respective window to be displayed from the whole picture,
and wherein the converter circuit (24) generates display signals (AS1, AS2) with a standard value for all other picture data which are not assigned to the window to be displayed from the whole picture.

2. Apparatus according to Claim 1, **characterized in that** the display signals are RGB signals.

3. Apparatus according to Claim 1 or Claim 2,
**characterized in that** the register device (32) has a register with a plurality of register sets which are each assigned to one of the n display devices (20, 22).

4. Apparatus according to one of Claims 1 to 3,
**characterized in that** the converter circuit (24) has n display signal generating devices which each generate the display signals (AS1, AS2) for one of the n display devices (20, 22).

5. Apparatus according to Claim 4, **characterized in that** the converter circuit (24) has a plurality of RAMDACs (26, 28), which each correspond to a display signal generating device, which are each connected to one of the display devices (20, 22) on the output side and which each generate the display signals (AS1, AS2) for the connected display device (20, 22).

6. Apparatus according to one of Claims 1 to 5,
**characterized in that** the register device (32) has a register with n register locations, each of which is connected to one of the display signal generating devices on the output side.

7. Apparatus according to one of Claims 1 to 6,
**characterized in that** display devices operating according to the same or different display principles (CRT, LDC, plasma) can be operated from the converter circuit (24), for which purpose the RAMDAC assigned to a display device is constructed in a manner corresponding to its display principle.

8. Apparatus according to one of Claims 1 to 7,
**characterized in that** the apparatus is accommodated on a printed circuit board.

9. System with a programmable window function, which comprises:
- a plurality of display devices (20, 22),
- a processor device (10, 12, 14, 16), which generates picture data for display on the display devices (20, 22), and an apparatus, in particular a VGA adapter (18), according to one of Claims 1 to 8, wherein the processor device controls the read-out of the picture data from the video memory (38) and the setting of the register device (32).

10. Method for simultaneously displaying picture data on a plurality of display devices (20, 22), in which picture data of a whole picture are generated and stored,
**characterized by** the following steps:
- window data are generated and stored which identify each window, from the whole picture, that is to be displayed on one of the display devices (20, 22),
- the stored picture data are subsequently read sequentially and converted into display signals (AS1, AS2), which each have a colour value or a standard value,
* wherein display signals (AS1, AS2) with a colour value are generated in dependence on the window data for those picture data which are assigned to the window to be displayed from the whole picture, and
* wherein display signals (AS1, AS2) with a standard value are generated for all other picture data which are not assigned to the window to be displayed from the whole picture.

## Revendications

1. Dispositif, notamment adaptateur (18) VGA, pour commander en même temps plusieurs dispositifs (20, 22) d'affichage, le dispositif convertissant des données d'image en signaux (AS1, AS2) d'affichage et les envoyant aux dispositifs (20, 22) d'affichage afin de produire une image complète sur les dispositifs (20, 22) d'affichage, et le dispositif comportant : une mémoire (38) vidéo qui mémorise des données d'image d'une image complète et un circuit (24) de conversion qui est relié à la mémoire (38) vidéo et qui produit à partir des données d'image lues séquentiellement dans la mémoire (38) vidéo des signaux (AS1, AS2) d'affichage commandant les dispositifs (20, 22) d'affichage,
**caractérisé**
**en ce qu'**il peut être produit sur les dispositifs (20, 22) d'affichage aussi une fenêtre de l'image complète ou d'une partie d'une surface d'image virtuelle à afficher dans son ensemble
et **en ce qu'**il est relié au circuit (24) de conversion un dispositif (32) de registre, dans lequel il est mémorisé des données de fenêtre qui caractérisent chaque fenêtre de l'image complète à afficher sur l'un des dispositifs (20, 22) d'affichage,
le circuit (24) de conversion produisant des signaux (AS1, AS2) d'affichage à valeur de couleur en fonction des données de fenêtre du dispositif (32) de registre pour les données d'image, qui sont associées à la fenêtre à afficher de l'image complète,
et le circuit (24) de conversion produisant des signaux (AS1, AS2) d'affichage à valeur normalisée pour toutes les autres données d'image, qui ne sont pas associées à la fenêtre à afficher de l'image complète.

2. Dispositif suivant la revendication 1, **caractérisé en ce que** les signaux d'affichage sont des signaux RGB.

3. Dispositif suivant la revendication 1 ou la revendication 2,
**caractérisé en ce que** le dispositif (32) de registre a un registre comportant plusieurs ensembles de registres qui sont associés chacun à l'un des n dispositifs (20, 22) d'affichage.

4. Dispositif suivant l'une des revendications 1 à 3, **caractérisé en ce que** le circuit (24) de conversion à n dispositifs de production de signaux d'affichage qui produit chaque fois les signaux (AS1, AS2) d'affichage pour l'un des n dispositifs (20, 22) d'affichage.

5. Dispositif suivant la revendication 4, **caractérisé en ce que** le circuit (24) de conversion a plusieurs RAMDAC (26, 28) qui correspondent chaque fois à un dispositif de production de signaux d'affichage, qui sont reliés côté sortie chaque fois à l'un des dispositifs (20, 22) d'affichage et qui produisent chaque fois les signaux (AS1, AS2) d'affichage pour le dispositif (20, 22) d'affichage relié.

6. Dispositif suivant l'une des revendications 1 à 5, **caractérisé en ce que** le dispositif (32) de registre a un registre comportant n emplacements de registre, dont chacun est relié côté sortie à l'un des dispositifs de production de signaux d'affichage.

7. Dispositif suivant l'une des revendications 1 à 6, **caractérisé en ce que** le dispositif d'affichage travaillant suivant le même principe d'affichage ou suivant un principe d'affichage différent (CRT, affichage à cristaux liquides, plasma) peuvent fonctionner sur le circuit (24) de conversion, la RAMDAC associée à un dispositif d'affichage étant structurée suivant le principe d'affichage du dispositif d'affichage auquel elle est associée.

8. Dispositif suivant l'une des revendications 1 à 7, **caractérisé en ce que** le dispositif est monté sur une plaquette à circuit imprimé.

9. Système à fonction de fenêtre programmable, qui comprend :
- plusieurs dispositifs (20, 22) d'affichage,
- un dispositif (10, 12, 14, 16) de processeur qui produit des données pour l'affichage sur les dispositifs (20, 22) d'affichage et un dispositif, notamment un adaptateur (18) VGA, suivant l'une des revendications 1 à 8, le dispositif processeur commandant la lecture des données d'image dans la mémoire (38) vidéo et le positionnement du dispositif (32) de registre.

10. Procédé pour afficher des données d'image en même temps sur plusieurs dispositifs (20, 22) d'affichage, dans lequel on produit et on mémorise des données d'image d'une image complète,
**caractérisé par** les étapes suivantes :
- on produit et on mémorise des données de fenêtre, qui caractérisent chaque fenêtre de l'image complète à afficher sur l'un des dispositifs (20, 22) d'affichage,
- on lit ensuite séquentiellement les données d'image mémorisées et on les convertit en signaux (AS1, AS2) d'affichage, qui ont une valeur de couleur ou une valeur normalisée,
* des signaux (AS1, AS2) d'affichage à valeur de couleur étant produits en fonction des données de fenêtre pour les données d'image, qui sont associées à la fenêtre à afficher de l'image complète, et
* des signaux (AS1, AS2) d'affichage à valeur normalisée étant produits pour toutes les autres données d'image, qui ne sont pas associées à la fenêtre à afficher de l'image complète.
